# EUROPEAN PATENT SPECIFICATION

(11) **EP 4 573 739 B1**
(45) Date of publication and mention of the grant of the patent: **23.09.2026**
(21) Application number: 23762330.1
(22) Date of filing: 01.08.2023
(51) Int. Cl.: H04L 67/1031, H04L 67/10, H04L 67/143, H04W 76/30, H04L 41/0816, H04W 76/27, H04W 88/18

(54) **METHODS AND SYSTEMS FOR EDGE APPLICATION SERVER MANAGEMENT BASED ON APPLICATION CLIENT OR USER EQUIPMENT STATE**
METHODEN UND SYSTEME FÜR DIE VERWALTUNG VON ANWENDUNGSSERVERN AUF DER GRUNDLAGE DES ZUSTANDS VON ANWENDUNGSCLIENTS ODER BENUTZERGERÄTEN
MÉTHODES ET SYSTÈMES POUR LA GESTION DES SERVEURS D'APPLICATIONS EN PÉRIPHÉRIE SUR LA BASE DE L'ÉTAT DU CLIENT OU DE L'ÉQUIPEMENT DE L'UTILISATEUR

(30) Priority: 16.08.2022 IN 202241046446
(43) Date of publication of application: 25.06.2025
(73) Proprietor: QUALCOMM INCORPORATED, San Diego, California 92121-1714 (US)
(72) Inventor: SOLOWAY, Alan, San Diego, California 92121 (US); CHIN, Tom, San Diego, California 92121-1714 (US); GUPTA, Nishant, San Diego, California 92121-1714 (US); TONESI, Dario Serafino, San Diego, California 92121-1714 (US); KIM, Sunghoon, San Diego, California 92121-1714 (US)
(74) Representative: Jaeger, Michael David
(86) International application number: PCT/US2023/071426
(87) International publication number: WO 2024/039965

(56) References cited:
- US-A1- 2021 352 511
- SAMSUNG: "Application Client event reporting", vol. SA WG6, no. Online Meeting ;20200514 - 20200526, 8 May 2020 (2020-05-08), XP051882216, Retrieved from the Internet <URL:https://ftp.3gpp.org/tsg_sa/WG6_MissionCritical/TSGS6_037-e/Docs/S6-200730.zip S6-200730 EDGEAPP Application Client event reporting r1.doc> [retrieved on 20200508]

## Description

### BACKGROUND

### Technical Field

The present disclosure relates generally to wireless communication, and more particularly, implementing a procedure for managing edge application servers based on application client (AC) state and/or user equipment (UE) state.

### Introduction

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is 5G New Radio (NR). 5G NR is part of a continuous mobile broadband evolution promulgated by Third Generation Partnership Project (3GPP) to meet new requirements associated with latency, reliability, security, scalability (such as with Internet of Things (IoT)), and other requirements. 5G NR includes services associated with enhanced mobile broadband (eMBB), massive machine type communications (mMTC), and ultra reliable low latency communications (URLLC). Some aspects of 5G NR may be based on the 4G Long Term Evolution (LTE) standard. There exists a need for further improvements in 5G NR technology. US 2021/0352511 A1 relates to an application layer network architecture providing an edge computing service in a cellular wireless communication system. According to an embodiment, a method of an EES comprises receiving, froman EEC, a first message including information used to detemrinating matching EAS, and triggering an EAS management system to instantiate the matching EAS in response to receiving the first message. SAMSUNG: "Application Client event reporting", 3GPP DRAFT; S6-200730, vol. SA WG6, no. Online Meeting; 20200514-2020056 8 May 2020 XP051882216 also relates to application client event reporting.

### SUMMARY

Aspects of the invention are set out in the claims. In the following, any of the described methods, apparatuses, embodiments, examples, and aspects which does not correspond to the invention as defined in the claims is thus not according to the invention and is present for illustration purposes only or to highlight specific aspects or features of the claims. Embodiments not falling within the scope of the claims should be interpreted as examples useful for understanding the invention. The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In some aspects, the techniques described herein relate to an edge computing device, including: a memory storing computer-executable instructions; and at least one processor coupled with the memory and configured to execute the computer-executable instructions to: establish a subscription to event information of a user equipment (UE) or an application client executing on the UE, the application client associated with an edge application server instance executing within an edge data network; receive, based on the subscription, a notification of a context event of the application client and/or the UE; and cause release, suspension, or resumption of the edge application server instance in response to the notification.

In some aspects, the techniques described herein relate to a method for wireless communication, including: establishing a subscription to event information of a user equipment (UE) or an application client executing on the UE, the application client associated with an edge application server instance executing within an edge data network; receiving, based on the subscription, a notification of a context event of the application client and/or the UE; and causing release, suspension, or resumption of the edge application server instance in response to the notification. In addition, the disclosure also provides an apparatus including means for performing the above method.

In some aspects, the techniques described herein relate to a non-transitory computer-readable medium having instructions thereon that, when executed by at least one computing device, causes the at least one computing device to perform operations including: establishing a subscription to event information of a user equipment (UE) or an application client executing on the UE, the application client associated with an edge application server instance executing within an edge data network; receiving, based on the subscription, a notification of a context event of the application client and/or the UE; and causing release, suspension, or resumption of the edge application server instance in response to the notification.

To the accomplishment of the foregoing and related ends, the one or more aspects include the features hereinafter fully described and particularly pointed out in the claims. The following description and the annexed drawings set forth in detail some illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network, in accordance with some aspects of the present disclosure.
FIG. 2A is a diagram illustrating an example of a first 5G/NR frame, in accordance with some aspects of the present disclosure.
FIG. 2B is a diagram illustrating an example of DL channels within a 5G/NR subframe, in accordance with some aspects of the present disclosure.
FIG. 2C is a diagram illustrating an example of a second 5G/NR frame, in accordance with some aspects of the present disclosure.
FIG. 2D is a diagram illustrating an example of UL channels within a 5G/NR subframe, in accordance with some aspects of the present disclosure.
FIG. 3 is a diagram illustrating an example of a base station and a UE in an access network, in accordance with some aspects of the present disclosure.
FIG. 4 is a diagram illustrating an example disaggregated base station architecture, in accordance with some aspects of the present disclosure.
FIG. 5 is a diagram illustrating an example of communications of a network entities and devices, in accordance with some aspects of the present disclosure.
FIG. 6 is a diagram illustrating an example of a hardware implementation for a user equipment employing a processing system, in accordance with some aspects of the present disclosure.
FIG. 7 is a schematic block diagram of example components of a computing device, according to aspects of the present disclosure in accordance with some aspects of the present disclosure, in accordance with some aspects of the present disclosure.
FIG. 8 is a flowchart of a first example method of managing edge application servers based on application client state and/or UE state, in accordance with some aspects of the present disclosure.
FIG. 9 is a flowchart of a second example method of managing edge application servers based on application client state and/or UE state, in accordance with some aspects of the present disclosure.
FIG. 10 is a flowchart of a third example method of managing edge application servers based on application client state and/or UE state, in accordance with some aspects of the present disclosure.
FIG. 11 is a flowchart of a fourth example method of managing edge application servers based on application client state and/or UE state, in accordance with some aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to a person having ordinary skill in the art that these concepts may be practiced without these specific details. In some instances, structures and components are shown in block diagram form in order to avoid obscuring such concepts.

Several aspects of telecommunication systems will now be presented with reference to various apparatus and methods. These apparatus and methods will be described in the following detailed description and illustrated in the accompanying drawings by various blocks, components, circuits, processes, algorithms, among other examples (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, among other examples, whether referred to as software, firmware, middleware, microcode, hardware description language, or otherwise.

Accordingly, in one or more examples, the functions described may be implemented in hardware, software, or any combination thereof. If implemented in software, the functions may be stored on or encoded as one or more instructions or code on a computer-readable medium. Computer-readable media includes computer storage media, which may be referred to as non-transitory computer-readable media. Non-transitory computer-readable media may exclude transitory signals. Storage media may be any available media that can be accessed by a computer. By way of example, and not limitation, such computer-readable media can include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

Various implementations relate generally to a procedure for managing edge application servers based on AC state and/or UE state. Edge Computing is a network architecture concept that enables cloud computing capabilities and service environments, which are deployed close to the UE. Edge Computing provides several benefits such as lower latency, higher bandwidth, reduced backhaul traffic and prospects for new services compared to the cloud environments. In some aspects, an AC executing on a UE (e.g., a gaming application client) may employ an edge application server (EAS) instance created in a cloud computing environment using provisioned resources. For instance, the application client may connect to the edge application server instance in order to avail the services of the application with the benefits of Edge Computing, e.g., prefetching, caching, processing, or serving of data. However, in some aspects, if the AC goes dormant or the UE goes into an idle state the EAS instance will remain active/instantiated until an application layer decides to deactivate/release that EAS instance. Consequently, the resources assigned to the EAS instance may not be re-assigned and/or re-used even though they are not currently in-use by the AC and the EAS instance. For example, the present invention may improve power utilization and computing utilization, and increase the number of devices and/or ACs supported by an edge data network.

As such, in some aspects, a UE and/or core network may be configured to notify to an edge enabler server, an EAS instance, or an EAS management system when served ACs become active or inactive or UEs enter an idle or connected states. Further, the edge enabler server, the EAS instance, or EAS management system may be configured to release, suspend, or re-instantiate the EAS instance based on notification received from the UE and/or the core network. Accordingly, in some aspects, EAS instances may be efficiently managed to provide improved resource management in edge computing networks. For example, the present invention may improve power utilization, memory utilization, and computing utilization, and increase the number of devices and/or ACs supported by an edge network.

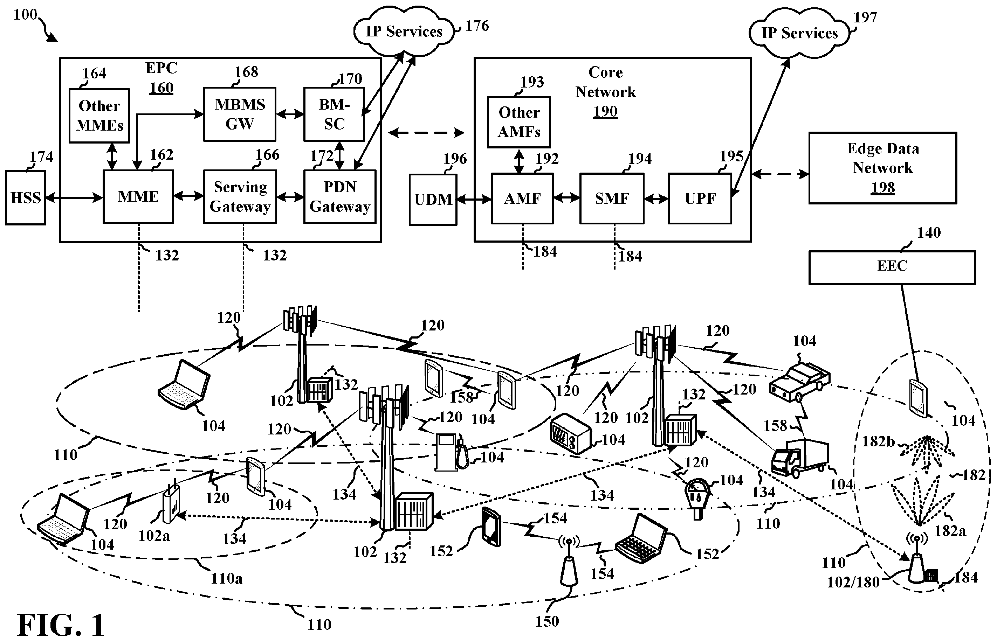

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (for example, a 5G Core (5GC)). The base stations 102 may include macrocells (high power cellular base station) or small cells (low power cellular base station). The macrocells include base stations. The small cells include femtocells, picocells, and microcells.

In an aspect, the UE 104 may include an edge enabler client 140. Further, the edge enabler client 140 and the core network 190 may be configured to provide state information to an edge data network 198. Additionally, as described in detail herein, the edge data network 198 may manage one or more computing resources (e.g., server instances) of the edge data network 198 based on the state information received from the edge enabler client 140 and the core network 190. In particular, the edge data network 198 may release, suspend, or re-instantiate one or more resources based upon the state information provided by the edge enabler client 140 and the core network 190 with respect to a UE utilizing the one or more computing resources.

The base stations 102 configured for 4G LTE (collectively referred to as Evolved Universal Mobile Telecommunications System (UMTS) Terrestrial Radio Access Network (E-UTRAN)) may interface with the EPC 160 through first backhaul links 132 (for example, an S1 interface). The base stations 102 configured for 5G NR (collectively referred to as Next Generation RAN (NG-RAN)) may interface with core network 190 through second backhaul links 184. In addition to other functions, the base stations 102 may perform one or more of the following functions: transfer of user data, radio channel ciphering and deciphering, integrity protection, header compression, mobility control functions (for example, handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (for example, through the EPC 160 or core network 190) with each other over third backhaul links 134 (for example, X2 interface). The third backhaul links 134 may be wired or wireless.

The base stations 102 may wirelessly communicate with the UEs 104. Each of the base stations 102 may provide communication coverage for a respective geographic coverage area 100. There may be overlapping geographic coverage areas 100. For example, the small cell 102a may have a coverage area 100a that overlaps the coverage area 100 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 or downlink (DL) (also referred to as forward link) transmissions from a base station 102 to a UE 104. The communication links 120 may use multiple-input and multiple-output (MIMO) antenna technology, including spatial multiplexing, beamforming, or transmit diversity. The communication links may be through one or more carriers. The base stations 102 / UEs 104 may use spectrum up to Y MHz (for example, 5, 10, 15, 20, 100, 400 MHz, among other examples) bandwidth per carrier allocated in a carrier aggregation of up to a total of Yx MHz (x component carriers) used for transmission in each direction. The carriers may or may not be adjacent to each other. Allocation of carriers may be asymmetric with respect to DL and UL (for example, more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Some UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.10 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152 / AP 150 may perform a clear channel assessment (CCA) prior to communicating in order to determine whether the channel is available.

The small cell 102a may operate in a licensed or an unlicensed frequency spectrum. When operating in an unlicensed frequency spectrum, the small cell 102a may employ NR and use the same 5 GHz unlicensed frequency spectrum as used by the Wi-Fi AP 150. The small cell 102a, employing NR in an unlicensed frequency spectrum, may boost coverage to or increase capacity of the access network.

A base station 102, whether a small cell 102a or a large cell (for example, macro base station), may include or be referred to as an eNB, gNodeB (gNB), or another type of base station. Some base stations, such as gNB 180 may operate in one or more frequency bands within the electromagnetic spectrum. The electromagnetic spectrum is often subdivided, based on frequency/wavelength, into various classes, bands, channels, etc. In 5G NR two initial operating bands have been identified as frequency range designations FR1 (416 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" (mmW) band in documents and articles, despite being different from the extremely high frequency (EHF) band (30 GHz - 300 GHz) which is identified by the International Telecommunications Union (ITU) as a "millimeter wave" band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band. Communications using the mmW radio frequency band have extremely high path loss and a short range. The mmW base station 180 may utilize beamforming 182 with the UE 104 to compensate for the path loss and short range. The base station 180 and the UE 104 may each include a plurality of antennas, such as antenna elements, antenna panels, or antenna arrays to facilitate the beamforming.

The base station 180 may transmit a beamformed signal to the UE 104 in one or more transmit directions 182a. The UE 104 may receive the beamformed signal from the base station 180 in one or more receive directions 182b. The UE 104 may also transmit a beamformed signal to the base station 180 in one or more transmit directions. The base station 180 may receive the beamformed signal from the UE 104 in one or more receive directions. The base station 180 / UE 104 may perform beam training to determine the best receive and transmit directions for each of the base station 180 / UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include an Access and Mobility Management Function (AMF) 192, other AMFs 193, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the AMF 192 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming Service, or other IP services.

The base station may include or be referred to as a gNB, Node B, eNB, an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a satellite phone, a cellular phone, a smart phone, a session initiation protocol (SIP) phone, a laptop, a personal digital assistant (PDA), a satellite radio, a global positioning system, a multimedia device, a video device, a digital audio player (for example, MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (for example, parking meter, gas pump, toaster, vehicles, heart monitor, among other examples). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the following description may be focused on 5G NR, the concepts described herein may be applicable to other similar areas, such as LTE, LTE-A, CDMA, GSM, and other wireless technologies.

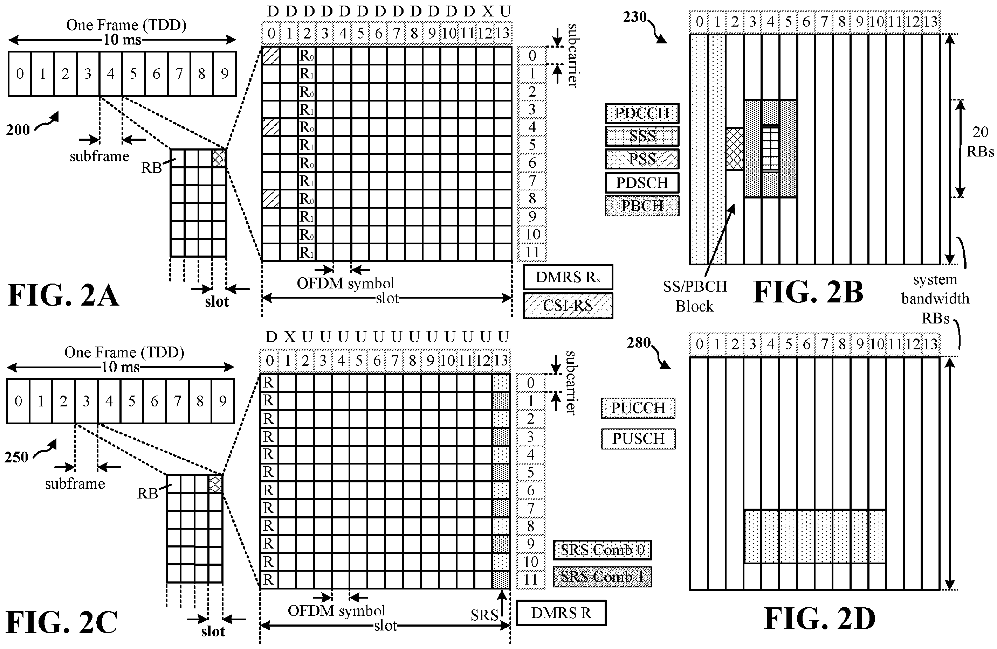

FIGS. 2A-2D include example diagrams 200, 230, 250, and 280 illustrating examples structures that may be used for wireless communication by the base station 102 and the UE 104, e.g., for 5G NR communication. FIG. 2A is a diagram 200 illustrating an example of a first subframe within a 5G/NR frame structure. FIG. 2B is a diagram 230 illustrating an example of DL channels within a 5G/NR subframe. FIG. 2C is a diagram 250 illustrating an example of a second subframe within a 5G/NR frame structure. FIG. 2D is a diagram 280 illustrating an example of UL channels within a 5G/NR subframe. The 5G/NR frame structure may be FDD in which for a particular set of subcarriers (carrier system bandwidth), subframes within the set of subcarriers are dedicated for either DL or UL, or may be TDD in which for a particular set of subcarriers (carrier system bandwidth), subframes within the set of subcarriers are dedicated for both DL and UL. In the examples provided by FIGS. 2A, 2C, the 5G/NR frame structure is assumed to be TDD, with subframe 4 being configured with slot format 28 (with mostly DL), where D is DL, U is UL, and X is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI). Note that the description presented herein applies also to a 5G/NR frame structure that is TDD.

Other wireless communication technologies may have a different frame structure or different channels. A frame (10 ms) may be divided into 10 equally sized subframes (1 ms). Each subframe may include one or more time slots. Subframes may also include mini-slots, which may include 7, 4, or 2 symbols. Each slot may include 7 or 14 symbols, depending on the slot configuration. For slot configuration 0, each slot may include 14 symbols, and for slot configuration 1, each slot may include 7 symbols. The symbols on DL may be cyclic prefix (CP) OFDM (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission). The number of slots within a subframe is based on the slot configuration and the numerology. For slot configuration 0, different numerologies µ 0 to 5 allow for 1, 2, 4, 8, 16, and 32 slots, respectively, per subframe. For slot configuration 1, different numerologies 0 to 2 allow for 2, 4, and 8 slots, respectively, per subframe. For slot configuration 0 and numerology µ, there are 14 symbols/slot and 2µ slots/subframe. The subcarrier spacing and symbol length/duration are a function of the numerology. The subcarrier spacing may be equal to 2*^{µ}* * 15 kHz, where *µ* is the numerology 0 to 5. As such, the numerology µ=0 has a subcarrier spacing of 15 kHz and the numerology µ=5 has a subcarrier spacing of 480 kHz. The symbol length/duration is inversely related to the subcarrier spacing. FIGS. 2A-2D provide an example of slot configuration 0 with 14 symbols per slot and numerology µ=0 with 1 slot per subframe. The subcarrier spacing is 15 kHz and symbol duration is approximately 66.7 µs.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in FIG. 2A, some of the REs carry reference (pilot) signals (RS) for the UE. The RS may include demodulation RS (DM-RS) (indicated as Rx for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

FIG. 2B illustrates an example of various DL channels within a subframe of a frame. The physical downlink control channel (PDCCH) carries DCI within one or more CCE, each CCE including nine RE groups (REGs), each REG including four consecutive REs in an OFDM symbol. A primary synchronization signal (PSS) may be within symbol 2 of particular subframes of a frame. The PSS is used by a UE 104 to determine subframe/symbol timing and a physical layer identity. A secondary synchronization signal (SSS) may be within symbol 4 of particular subframes of a frame. The SSS is used by a UE to determine a physical layer cell identity group number and radio frame timing. Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block (SSB). The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in FIG. 2C, some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. Although not shown, the UE may transmit sounding reference signals (SRS). The SRS may be used by a base station for channel quality estimation to enable frequency-dependent scheduling on the UL.

FIG. 2D illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and HARQ ACK/NACK feedback. The PUSCH carries data, and may additionally be used to carry a buffer status report (BSR), a power headroom report (PHR), or UCI.

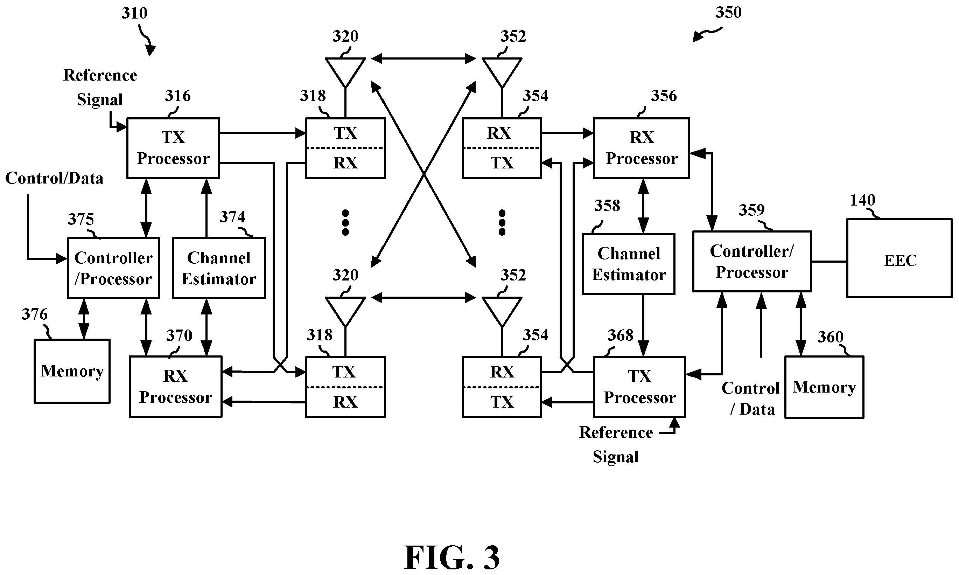

FIG. 3 is a block diagram of a base station 102/180 in communication with a UE 104 in an access network. In the DL, IP packets from the EPC 160 may be provided to a controller/processor 375. The controller/processor 375 implements layer 3 and layer 2 functionality. Layer 3 includes a radio resource control (RRC) layer, and layer 2 includes a service data adaptation protocol (SDAP) layer, a packet data convergence protocol (PDCP) layer, a radio link control (RLC) layer, and a medium access control (MAC) layer. The controller/processor 375 provides RRC layer functionality associated with broadcasting of system information (such as MIB, SIBs), RRC connection control (such as RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 316 and the receive (RX) processor 370 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 316 handles mapping to signal constellations based on various modulation schemes (such as binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (such as a pilot) in the time or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 374 may be used to determine the coding and modulation scheme, as well as for spatial processing. The channel estimate may be derived from a reference signal or channel condition feedback transmitted by the UE 104. Each spatial stream may then be provided to a different antenna 320 via a separate transmitter 318TX. Each transmitter 318TX may modulate an RF carrier with a respective spatial stream for transmission.

At the UE 104, each receiver 354RX receives a signal through its respective antenna 352. Each receiver 354RX recovers information modulated onto an RF carrier and provides the information to the receive (RX) processor 356. The TX processor 368 and the RX processor 356 implement layer 1 functionality associated with various signal processing functions. The RX processor 356 may perform spatial processing on the information to recover any spatial streams destined for the UE 104. If multiple spatial streams are destined for the UE 104, they may be combined by the RX processor 356 into a single OFDM symbol stream. The RX processor 356 then converts the OFDM symbol stream from the time-domain to the frequency domain using a Fast Fourier Transform (FFT). The frequency domain signal includes a separate OFDM symbol stream for each subcarrier of the OFDM signal. The symbols on each subcarrier, and the reference signal, are recovered and demodulated by determining the most likely signal constellation points transmitted by the base station 102 /180. These soft decisions may be based on channel estimates computed by the channel estimator 358. The soft decisions are then decoded and deinterleaved to recover the data and control signals that were originally transmitted by the base station 102/180 on the physical channel. The data and control signals are then provided to the controller/processor 359, which implements layer 3 and layer 2 functionality.

The controller/processor 359 can be associated with a memory 360 that stores program codes and data. The memory 360 may be referred to as a computer-readable medium. In the UL, the controller/processor 359 provides demultiplexing between transport and logical channels, packet reassembly, deciphering, header decompression, and control signal processing to recover IP packets from the EPC 160. The controller/processor 359 is also responsible for error detection using an ACK or NACK protocol to support HARQ operations.

Similar to the functionality described in connection with the DL transmission by the base station 102/180, the controller/processor 359 provides RRC layer functionality associated with system information (for example, MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 358 from a reference signal or feedback transmitted by the base station 102/180 may be used by the TX processor 368 to select the appropriate coding and modulation schemes, and to facilitate spatial processing. The spatial streams generated by the TX processor 368 may be provided to different antenna 352 via separate transmitters 354TX. Each transmitter 354TX may modulate an RF carrier with a respective spatial stream for transmission.

The UL transmission is processed at the base station 102/180 in a manner similar to that described in connection with the receiver function at the UE 104. Each receiver 318RX receives a signal through its respective antenna 320. Each receiver 318RX recovers information modulated onto an RF carrier and provides the information to a RX processor 370.

The controller/processor 375 can be associated with a memory 376 that stores program codes and data. The memory 376 may be referred to as a computer-readable medium. In the UL, the controller/processor 375 provides demultiplexing between transport and logical channels, packet reassembly, deciphering, header decompression, control signal processing to recover IP packets from the UE 104. IP packets from the controller/processor 375 may be provided to the EPC 160. The controller/processor 375 is also responsible for error detection using an ACK or NACK protocol to support HARQ operations.

In the UE 104, at least one of the TX processor 368, the RX processor 356, and the controller/processor 359 may be configured to perform aspects in connection with the EEC 140 of FIG. 1.

Deployment of communication systems, such as 5G new radio (NR) systems, may be arranged in multiple manners with various components or constituent parts. In a 5G NR system, or network, a network node, a network entity, a mobility element of a network, a radio access network (RAN) node, a core network node, a network element, or a network equipment, such as a base station (BS), or one or more units (or one or more components) performing base station functionality, may be implemented in an aggregated or disaggregated architecture. For example, a BS (such as a Node B (NB), evolved NB (eNB), NR BS, 5G NB, access point (AP), a transmit receive point (TRP), or a cell, etc.) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more central or centralized units (CUs), one or more distributed units (DUs), or one or more radio units (RUs)). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU also can be implemented as virtual units, i.e., a virtual central unit (VCU), a virtual distributed unit (VDU), or a virtual radio unit (VRU).

Base station-type operation or network design may consider aggregation characteristics of base station functionality. For example, disaggregated base stations may be utilized in an integrated access backhaul (IAB) network, an open radio access network (O-RAN (such as the network configuration sponsored by the O-RAN Alliance)), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

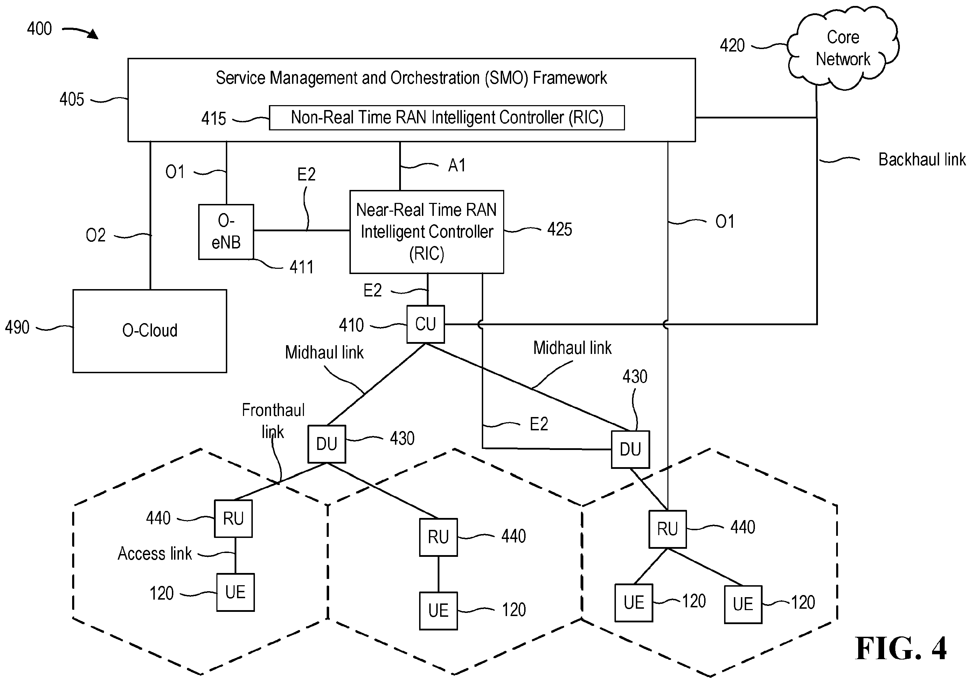

FIG. 4 shows a diagram illustrating an example disaggregated base station 400 architecture. The disaggregated base station 400 architecture may include one or more central units (CUs) 410 that can communicate directly with a core network 420 via a backhaul link, or indirectly with the core network 420 through one or more disaggregated base station units (such as a Near-Real Time (Near-RT) RAN Intelligent Controller (RIC) 425 via an E2 link, or a Non-Real Time (Non-RT) RIC 415 associated with a Service Management and Orchestration (SMO) Framework 405, or both). A CU 410 may communicate with one or more distributed units (DUs) 430 via respective midhaul links, such as an F1 interface. The DUs 430 may communicate with one or more radio units (RUs) 440 via respective fronthaul links. The RUs 440 may communicate with respective UEs 104 via one or more radio frequency (RF) access links. In some implementations, the UE 104 may be simultaneously served by multiple RUs 440.

Each of the units, i.e., the CUs 410, the DUs 430, the RUs 440, as well as the Near-RT RICs 425, the Non-RT RICs 415 and the SMO Framework 405, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as a radio frequency (RF) transceiver), configured to receive or transmit signals, or both, over a wireless transmission medium to one or more of the other units.

In some aspects, the CU 410 may host one or more higher layer control functions. Such control functions can include radio resource control (RRC), packet data convergence protocol (PDCP), service data adaptation protocol (SDAP), or the like. Each control function can be implemented with an interface configured to communicate signals with other control functions hosted by the CU 410. The CU 410 may be configured to handle user plane functionality (i.e., Central Unit - User Plane (CU-UP)), control plane functionality (i.e., Central Unit - Control Plane (CU-CP)), or a combination thereof. In some implementations, the CU 410 can be logically split into one or more CU-UP units and one or more CU-CP units. The CU-UP unit can communicate bidirectionally with the CU-CP unit via an interface, such as the E1 interface when implemented in an O-RAN configuration. The CU 410 can be implemented to communicate with the DU 430, as necessary, for network control and signaling.

The DU 430 may correspond to a logical unit that includes one or more base station functions to control the operation of one or more RUs 440. In some aspects, the DU 430 may host one or more of a radio link control (RLC) layer, a medium access control (MAC) layer, and one or more high physical (PHY) layers (such as modules for forward error correction (FEC) encoding and decoding, scrambling, modulation and demodulation, or the like) depending, at least in part, on a functional split, such as those defined by the 3rd Generation Partnership Project (3GPP). In some aspects, the DU 430 may further host one or more low PHY layers. Each layer (or module) can be implemented with an interface configured to communicate signals with other layers (and modules) hosted by the DU 430, or with the control functions hosted by the CU 410.

Lower-layer functionality can be implemented by one or more RUs 440. In some deployments, an RU 440, controlled by a DU 430, may correspond to a logical node that hosts RF processing functions, or low-PHY layer functions (such as performing fast Fourier transform (FFT), inverse FFT (iFFT), digital beamforming, physical random-access channel (PRACH) extraction and filtering, or the like), or both, based at least in part on the functional split, such as a lower layer functional split. In such an architecture, the RU(s) 440 can be implemented to handle over the air (OTA) communication with one or more UEs 104. In some implementations, real-time and non-real-time aspects of control and user plane communication with the RU(s) 440 can be controlled by the corresponding DU 430. In some scenarios, this configuration can enable the DU(s) 430 and the CU 410 to be implemented in a cloud-based RAN architecture, such as a vRAN architecture.

The SMO Framework 405 may be configured to support RAN deployment and provisioning of non-virtualized and virtualized network elements. For non-virtualized network elements, the SMO Framework 405 may be configured to support the deployment of dedicated physical resources for RAN coverage requirements which may be managed via an operations and maintenance interface (such as an O1 interface). For virtualized network elements, the SMO Framework 405 may be configured to interact with a cloud computing platform (such as an open cloud (O-Cloud) 490) to perform network element life cycle management (such as to instantiate virtualized network elements) via a cloud computing platform interface (such as an O2 interface). Such virtualized network elements can include, but are not limited to, CUs 410, DUs 430, RUs 440 and Near-RT RICs 425. In some implementations, the SMO Framework 405 can communicate with a hardware aspect of a 4G RAN, such as an open eNB (O-eNB) 410, via an O1 interface. Additionally, in some implementations, the SMO Framework 405 can communicate directly with one or more RUs 440 via an O1 interface. The SMO Framework 405 also may include a non-RT RIC 415 configured to support functionality of the SMO Framework 405.

The Non-RT RIC 415 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 425. The Non-RT RIC 415 may be coupled to or communicate with (such as via an A1 interface) the Near-RT RIC 425. The Near-RT RIC 425 may be configured to include a logical function that enables near-real-time control and optimization of RAN elements and resources via data collection and actions over an interface (such as via an E2 interface) connecting one or more CUs 410, one or more DUs 430, or both, as well as an O-eNB, with the Near-RT RIC 425.

In some implementations, to generate AI/ML models to be deployed in the Near-RT RIC 425, the Non-RT RIC 415 may receive parameters or external enrichment information from external servers. Such information may be utilized by the Near-RT RIC 425 and may be received at the SMO Framework 405 or the Non-RT RIC 415 from non-network data sources or from network functions. In some examples, the non-RT RIC 415 or the Near-RT RIC 425 may be configured to tune RAN behavior or performance. For example, the non-RT RIC 415 may monitor long-term trends and patterns for performance and employ AI/ML models to perform corrective actions through the SMO Framework 405 (such as reconfiguration via O1) or via creation of RAN management policies (such as A1 policies).

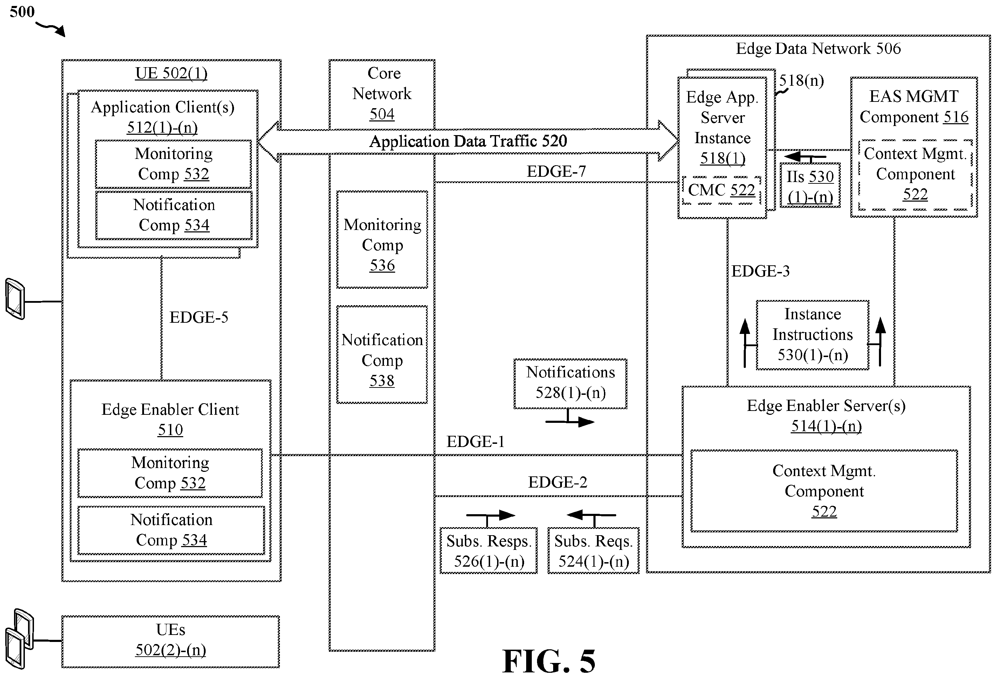

Referring to FIGS. 5-11, in one non-limiting aspect, a system 500 is configured to implement a procedure for managing edge application servers based on application client state and/or UE state, in accordance with some aspects of the present disclosure.

FIG. 5 is a diagram illustrating example communications and components of network entities and devices. As illustrated in FIG. 5, the system 500 may include one or more UEs 502(1)-(n) (e.g., the UEs 104), a core network 504 (e.g., the core network 190), and an edge data network (EDN) 506 (e.g., edge data network 198). Some examples of the UEs 502(1)-(n) include smartphone devices, tablet devices, wearable devices, computing devices, Internet of Things (IoT) devices, unmanned aerial vehicles, robots, process automation equipment, sensors, control devices, vehicles, transportation equipment, tactile interaction equipment, virtual and augmented reality (VR and AR) devices, industrial machines, virtual machines, etc. Further, as illustrated in FIG. 5, a UE 502 may include an edge enabler client (EEC) 510 and one or more application clients (ACs) 512(1)-(n).

Edge computing is used in distributed computing to bring computing and storage closer to a particular data source. As such, the EDN 506 may reduce the latency at the UEs 502(1)-(n) or reduce the load placed on cloud computing resources by the core network 504. In some aspects, the EDN 506 may include a local data network that supports a computer architecture for enabling edge applications. For example, the EDN 506 may provide various edge services to the UEs 502(1)-(n) via the core network 504, e.g., the core network 504 may provide edge service via one or more base stations 102 / 180. In some aspects, the EDN 506 may provide prefetching, caching, processing, or serving of data transmitted to the UEs 502(1)-(n). As illustrated in FIG. 5, the EDN 506 may include at least one edge enabler server (EES) 514, an edge application server management component (EAS mgmt. component) 516, and one or more edge application server instances (EAS instances) 518(1)-(n).

Further, the system 500 may include at least EDGEs 1, 2, 3, 5, and 7, according to The 3rd Generation Partnership Project (3GPP) Technical Specification (TS) 23.558, to facilitate communications between the UEs 502(1)-(n) (e.g., the UEs 104), the core network 504, and the EDN 506. Additionally, or alternatively, the system 500 may include one or more communication networks 112(1)-(n) comprising any one or combination of multiple different types of networks, such as cellular networks, wireless networks, local area networks (LANs), wide area networks (WANs), personal area networks (PANs), the Internet, or any other type of network configured to communicate information between electronic devices (e.g., the UEs 502(1)-(n), the 3GPP core network 504, and the EDN 506).

In some aspects, the EEC 510 may be configured to provide supporting functions to the ACs 512. For example, the EEC 510 may retrieve configuration information to enable the exchange of application data traffic 520 with the EAS instances 518(1)-(n), discover EAS instances 518(1)-(n) available in the EDN 506, and detect mobility events of the UEs 502(1)-(n).

In some aspects, the EES 514 may provide supporting functions to the EAS instances 518(1)-(n) and the EEC 510. For example, the EES 514 may provision configuration information to the EEC 510 to enable exchange of the application data traffic 520 with the EAS instances 518(1)-(n), provide application programming interface (API) invoker and API exposing functions, interact with the core network 504 for accessing the capabilities of network functions, expose events related to application context transfer, provide EEC context transfer between EES instances 518(1)-(n), support external exposure of the core network 504 and service capabilities to the EAS instances 518(1)-(n), provide registration functions (i.e., registration, update, and de-registration) for the EECs (e.g., the EEC 510) of the UEs 502(1)-(n) and the EAS instances 518(1)-(n), trigger EAS instances 518 instantiation on demand, and support application context relocation (ACR) related operations.

As described in detail herein, in some aspects, the system 500 may provide intelligent resource management functions for edge computing via subscription and notification procedures. As illustrated in FIG. 5, the EES 514 may include a context management component 522 configured to manage release, suspension, and resumption of the EAS instances 518(1)-(n) based on activity of the UEs 502(1)-(n) and the ACs 512(1)-(n). As an example, an AC 512(1) of the UE 502(1) may utilize edge services provided by the EAS instance 518(1) via the application data traffic 520. For instance, the AC 512(1) may be a gaming application that relies on the EAS instance 518(1) for graphics processing and rendering. Further, in order to manage the EAS instance 518(1), the EES 514 may subscribe to receive event information concerning the AC 512(1) and/or the UE 502(1) from the EEC 510 and the core network 504, respectively. For example, the context management component 522 may transmit subscription requests 524 to the EEC 510 and the core network 504, and receive subscription responses 526 confirming creation of subscriptions at the EEC 510 and the core network 504 for the AC 512(1) and/or the UE 502(1). In some aspects, the EAS management component 516 or an EAS instance 518 may request that the EES 514 initiate the subscription in response to the instantiation of the EAS instance 518, and/or the establishment of the use of the EAS instance by the AC 512(1).

Additionally, the EES 514 may receive notification 528(1)-(n) based on the subscriptions. For example, the context management component 522 may receive notifications 528 in response to activity of the AC 512(1) or the UE 502(1). In some aspects, the notifications 528 received from the EEC 510 may indicate at least one of the UE 502(1) being in a sleep mode or other inactive mode, the UE 502(1) waking up from a sleep mode or other inactive mode, a lock screen of the UE 502(1) being active, an application context focus of the AC 512(1), the network connectivity of the UE 502(1), the current throughput capabilities and performance of the UE 502(1), the battery power of the UE 502(1), or whether a user is currently focused on and/or holding the UE 502(1). Further, in some aspects, the notifications 528 received from the core network 504 may indicate at least one of the reachability of the UE 502(1), the PDU session state of the UE 502(1), or the connection state (e.g., RRC state) of the UE 502(1). In addition, in some aspects, a subscription request 524 may indicate the type of information that should be transmitted in the notifications 528(1)-(n). For example, a subscription request for the core network 504 may indicate that the core network 504 should transmit notifications 528 related to the PDU session status of the UE 502(1) and/or reachability of the UE 502(1). As another example, a subscription request for the EEC 510 may indicate that the EEC 510 should transmit notifications 528 related to the activity and/or context status 512(1).

Further, the EES 514 may transmit instance instructions 530(1)-(n) to the EAS management component 516 or an EAS instance 518 based on the notifications 528(1)-(n). For example, the context management component 522 may transmit an instance instruction 530(1) indicating that the EAS instance 518(1) should be suspended in response to a notification 528(1) indicating that the AC 512(1) is inactive. Further, the EES may receive a notification 528(2) in response to the AC 512(1) subsequently becoming active, and transmit an instance instruction 530(2) indicating that the EAS instance 518(1) should be resumed in response to the UE 502(1) returning to an active state. As another example, the context management component 522 may send an instance instruction 530(1) indicating that the EAS instance 518(1) should be suspended in response to a notification 528(1) indicating that the AC 512(1) is inactive and no other ACs 512(2)-(n) are utilizing the EAS instance 512(1). In other words, in some aspects, if multiple ACs 512 are utilizing an EAS instance 518(2), an event at only one of the ACs 512 utilizing the EAS instance 518(2) will not result in a release, suspension, or resumption of the EAS instance 518(2).

In addition, in some aspects, the context management component 522 may employ one or more machine learning techniques to determine, based on the notifications 528(1)-(n) whether to transmit an instance instruction 530 and the indication (e.g., resumption, release, or suspension) to include within the instance instruction.

Additionally, or alternatively, in some aspects, the notifications 528(1)-(n) may be transmitted directly to the EAS instances 518(1)-(n) and/or the EAS management component 516. For instance, in some aspects, the EAS management component 516 may include a context management component 522 configured to subscribe to receive notifications concerning the AC 512(1) and/or the UE 502(1) from the EEC 510 and/or the core network 504, respectively, and generate instance instructions 530(1)-(n) based on the notifications 528(1)-(n). Further, in some aspects, an AC 512 may transmit notifications 528(1)-(n) directly to the EAS instances 518(1)-(n) and/or the EAS management component 516.

Upon receipt of the notifications 528(1)-(n), the associated EAS instance 518 and/or the EAS management component 516 may determine whether the associated EAS instance 518 should be released, suspended, or resumed. For example, the associated EAS instance 518 and/or the EAS management component 516 may determine that the associated EAS instance 518 should be suspended or released in response to a notification 528(1) indicating that the AC 512(1) is inactive and determining that no other ACs 512(2)-(n) and/or UEs 502(20-(n) are utilizing the EAS instance 512(1). As another example, the associated EAS instance 518 and/or the EAS management component 516 may determine that the associated EAS instance 518 should be resumed in response to a notification 528(1) indicating that the AC 512(1) has entered an active state from an inactive state.

As illustrated in FIG 5, in some aspects, the core network 504 may include a monitoring component 532 and a notification component 534. The monitoring component 532 may be configured to monitor state and/or activity of the ACs 512(1)-(n) of the UE 502(1) and the state and/or activity of the UE 502(1). For example, the monitoring component 532 may be configured to monitor the reachability of the UE 502(1), the session state (e.g., the PDU session state) of the UE 502(1), or the connection state (e.g., RRC state) of the UE 502(1). Further, the monitoring component 532 may be configured to determine event information based on the monitoring, and generate notification information describing the event information. The notification component 534 may manage and operate the subscriptions. In particular, the notification component 534 may receive the subscriptions requests 526(1)-(n), generate subscriptions for the ACs 512(1)-(n) and the UE 502(1), transmit subscription responses 526(1)-(n) confirming or denying generation of the subscriptions, and transmit the notifications 528(1)-(n) including notification information generated by the monitoring component 532 to the relevant subscribers. Additionally, or alternatively, an AC 512 may include the monitoring component 532 and the notification component 534.

As illustrated in FIG 5, in some aspects, the core network 504 may include a monitoring component 536 and a notification component 538. The monitoring component 536 may be configured to monitor state and/or activity of the ACs 512(1)-(n) of the UE 502(1) and the state and/or activity of the UE 502(1). For example, the monitoring component 532 may be configured to monitor whether the UE 502(1) is in a sleep mode or other inactive mode, the UE 502(1) waking up from a sleep mode or other inactive mode, a lock screen of the UE 502(1) is active, the UE 502(1) is currently held by a user, or the UE 502(1) is currently the object of a user's gaze. In addition, the monitoring component 532 may be configured to monitor an application context focus of the AC 512(1), the network connectivity of the UE 502(1), the current throughput capabilities and performance of the UE 502(1), and the battery power of the UE 502(1). Further, the monitoring component 532 may be configured to determine event information based on the monitoring, and generate notification information describing the event information. The notification component 534 may manage and operate the subscriptions. In particular, the notification component 534 may receive the subscriptions requests 526(1)-(n), generate subscriptions for the ACs 512(1)-(n) and the UE 502(1), transmit subscription responses 526(1)-(n) confirming or denying generation of the subscriptions, and transmit the notifications 528(1)-(n) including notification information generated by the monitoring component 532 to the relevant subscribers.

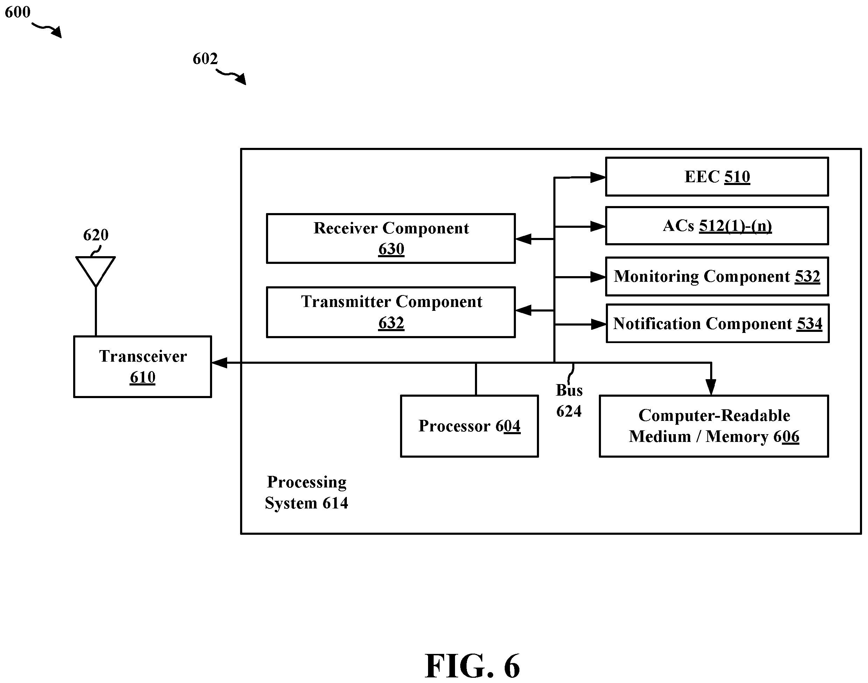

FIG. 6 is a diagram 600 illustrating an example of a hardware implementation for a computing device 602 (e.g., the UE 104, the UE 502, etc.) employing a processing system 614. The processing system 614 may be implemented with a bus architecture, represented generally by the bus 624. The bus 624 may include any number of interconnecting buses and/or bridges depending on the specific application of the processing system 614 and the overall design constraints. The bus 624 links together various circuits including one or more processors and/or hardware components, represented by the processor 604, the EEC 510, the ACs 512, the monitoring component 532, the notification component 534, and the computer-readable medium (e.g., non-transitory computer-readable medium) / memory 606. The bus 624 may also link various other circuits such as timing sources, peripherals, voltage regulators, and power management circuits, which are well known in the art, and therefore, will not be described any further.

The processing system 614 may be coupled with a transceiver 610. The transceiver 610 may be coupled with one or more antennas 620. The transceiver 610 provides a means for communicating with various other apparatus over a transmission medium. The transceiver 610 receives a signal from the one or more antennas, extracts information from the received signal, and provides the extracted information to the processing system 614, specifically the receiver component 630. The receiver component 630 may receive the periodic NTN SIs 508(1)-(n), the reporting requests 514(1)-(n), and the updated NTN SIs 516(1)-(n). In addition, the transceiver 610 receives information from the processing system 614, specifically the transmitter component 632, and based on the received information, generates a signal to be applied to the one or more antennas. Further, the transmitter component 632 may send acquisition indication 510(1)-(n).

The processing system 614 includes a processor 604 coupled with a computer-readable medium / memory 606 (e.g., a non-transitory computer readable medium). The processor 604 is responsible for general processing, including the execution of software stored on the computer-readable medium / memory 606. The software, when executed by the processor 604, causes the processing system 614 to perform the various functions described supra for any particular apparatus. The computer-readable medium / memory 606 may also be used for storing data that is manipulated by the processor 604 when executing software. The processing system 614 further includes at least one of the EEC 510, the ACs 512, the monitoring component 532, or the notification component 534. The aforementioned components may be a software component running in the processor 604, resident/stored in the computer readable medium / memory 606, one or more hardware components coupled with the processor 604, or some combination thereof. The processing system 614 may be a component of the computing device 602 and may include the memory 360 and/or at least one of the TX processor 368, the RX processor 356, and the controller/processor 359. Alternatively, the processing system 614 may be the entire UE (e.g., see 350 of FIG. 3, UE 502 of FIG. 5).

The aforementioned means may be one or more of the aforementioned components of the computing device 602 and/or the processing system 614 of device 602 configured to perform the functions recited by the aforementioned means. As described supra, the processing system 614 may include the TX Processor 368, the RX Processor 356, and the controller/processor 359. As such, in one configuration, the aforementioned means may be the TX Processor 368, the RX Processor 356, and the controller/processor 359 configured to perform the functions recited by the aforementioned means.

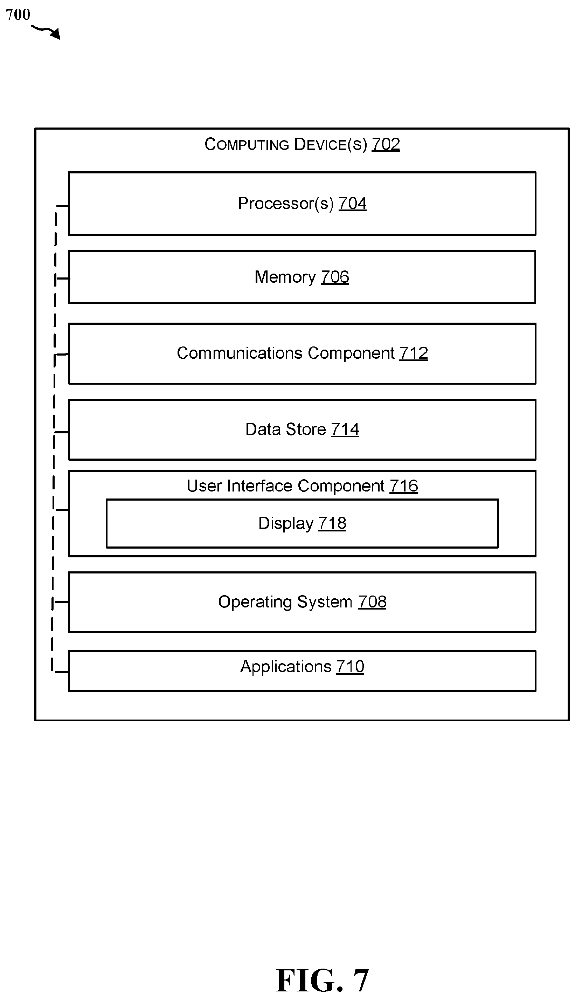

FIG. 7 is a diagram 700 illustrating an example of a hardware implementation for a device 702 (e.g., the EDN 506, the EES 514, the EAS management component 516, the EAS instances 518, etc.). In one example, the computing device 702 includes the processor 704 for carrying out processing functions associated with one or more of components and functions described herein. The processor 704 can include a single or multiple set of processors or multi-core processors. Moreover, the processor 704 may be implemented as an integrated processing system and/or a distributed processing system. In an example, the processor 704 includes, but is not limited to, any processor specially programmed as described herein, including a controller, microcontroller, a computer processing unit (CPU), a graphics processing unit (GPU), an application specific integrated circuit (ASIC), a field programmable gate array (FPGA), a system on chip (SoC), or other programmable logic or state machine. Further, the processor 704 may include other processing components such as one or more arithmetic logic units (ALUs), registers, or control units.

In an example, the computing device 702 also includes the memory 706 for storing instructions executable by the processor 704 for carrying out the functions described herein. The memory 706 may be configured for storing data and/or computer-executable instructions defining and/or associated with the operating system 708, one or more applications 710, and the processor 704 may execute the operating system 708, and/or the one or more applications 710. An example of memory 706 may include, but is not limited to, a type of memory usable by a computer, such as random access memory (RAM), read only memory (ROM), tapes, magnetic discs, optical discs, volatile memory, non-volatile memory, and any combination thereof. In an example, the memory 706 may store local versions of applications being executed by processor 704.

The example computing device 702 also includes a communications component 712 that provides for establishing and maintaining communications with one or more parties utilizing hardware, software, and services as described herein. The communications component 712 may carry communications between components on the computing device 702, as well as between the computing device 702 and external devices, such as devices located across a communications network and/or devices serially or locally connected to the computing device 702. For example, the communications component 712 may include one or more buses, and may further include transmit chain components and receive chain components associated with a transmitter and receiver, respectively, operable for interfacing with external devices.

The example computing device 702 also includes a data store 714, which may be any suitable combination of hardware and/or software, that provides for mass storage of information, databases, and programs employed in connection with implementations described herein. For example, the data store 714 may be a data repository for the operating system 708 and/or the applications 710.

The example computing device 702 also includes a user interface component 716 operable to receive inputs from a user of the computing device 702 and further operable to generate outputs for presentation to the user. The user interface component 716 may include one or more input devices, including but not limited to a keyboard, a number pad, a mouse, a touch-sensitive display (e.g., display 718), a digitizer, a navigation key, a function key, a microphone, a voice recognition component, any other mechanism capable of receiving an input from a user, or any combination thereof. Further, the user interface component 716 may include one or more output devices, including but not limited to a display (e.g., display 718), a speaker, a haptic feedback mechanism, a printer, any other mechanism capable of presenting an output to a user, or any combination thereof.

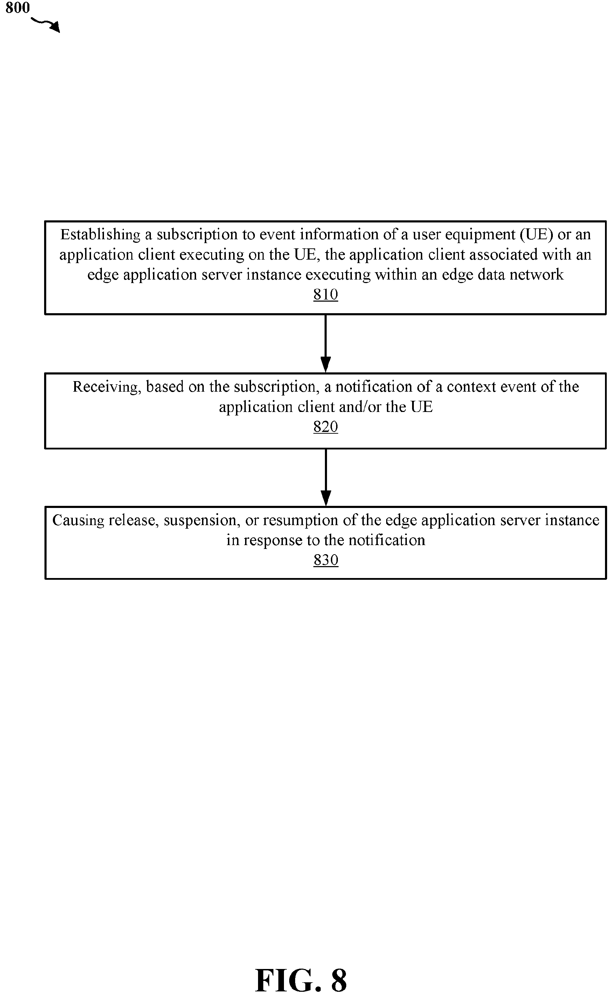

FIG. 8 is a flowchart of an example method of managing edge application servers based on application client state and/or UE state, in accordance with some aspects of the present disclosure. The method may be performed by a computing device (e.g., the EES 514, the EAS management component 516, or the EAS instance 518 of FIG. 5, the computing device 702 of FIG. 7 which may include the memory 706 and which may be the entire computing device 702 or a component of the computing device 702, such as the processor 704).

At block 810, the method 800 may include establishing a subscription to event information of a user equipment (UE) or an application client executing on the UE, the application client associated with an edge application server instance executing within an edge data network. For example, the EES 514, the EAS management component 516, or the EAS instance 518 may subscribe to event information corresponding to the AC 512(1) and/or the UE 502(1) at the EEC 510, AC 512(1), and/or the core network 504. In some aspects, a subscriber (e.g., the EES 514) may subscribe to the event information corresponding to the AC 512(1) and/or the UE 502(1) at the EEC 510, AC 512(1), and/or the core network 504 by transmitting a subscription request 524(1) to the EEC 510, AC 512(1), and/or the core network 504, and receive a subscription response 526(1) confirming that the subscription has been established.

Accordingly, the EES 514, the EAS management component 516, the EAS instance 518, the computing device 702, and/or the processor 704 executing the context management component 522 may provide means for establishing a subscription to event information of a user equipment (UE) or an application client executing on the UE, the application client associated with an edge application server instance executing within an edge data network.

At block 820, the method 800 may include receiving, based on the subscription, a notification of a context event of the application client and/or the UE. For example, the EES 514, the EAS management component 516, or the EAS instance 518 may receive one or more notifications 528, from the EEC 510 and/or the core network 504, identifying activity of the AC 512(1) and/or the UE 502(1) based on the previously-established subscription. A context event may indicate at least one of the UE 502(1) being in a sleep mode or other inactive mode, a lock screen of the UE 502(1) being active, the UE 502(1) waking up from a sleep mode or other inactive mode, an application context focus of the AC 512(1), the network connectivity of the UE 502(1), the current throughput capabilities and performance of the UE 502(1), the battery power of the UE 502(1), whether a user is currently focused on and/or holding the UE 502(1), the reachability of the UE 502(1), the PDU session state of the UE 502(1), or the connection state (e.g., RRC state) of the UE 502(1).

Accordingly, the EES 514, the EAS management component 516, the EAS instance 518, the computing device 702, and/or the processor 704 executing the context management component 522 may provide means for receiving, based on the subscription, a notification of a context event of the application client and/or the UE.

At block 830, the method 800 may include causing release, suspension, or resumption of the edge application server instance in response to the notification. For example, the EES 514 may transmit an instance instruction 530(1) based on the one or more notifications 528.

Accordingly, the EES 514, the EAS management component 516, the EAS instance 518, the computing device 702, and/or the processor 704 executing the context management component 522 may provide means for causing release, suspension, or resumption of the edge application server instance in response to the notification.

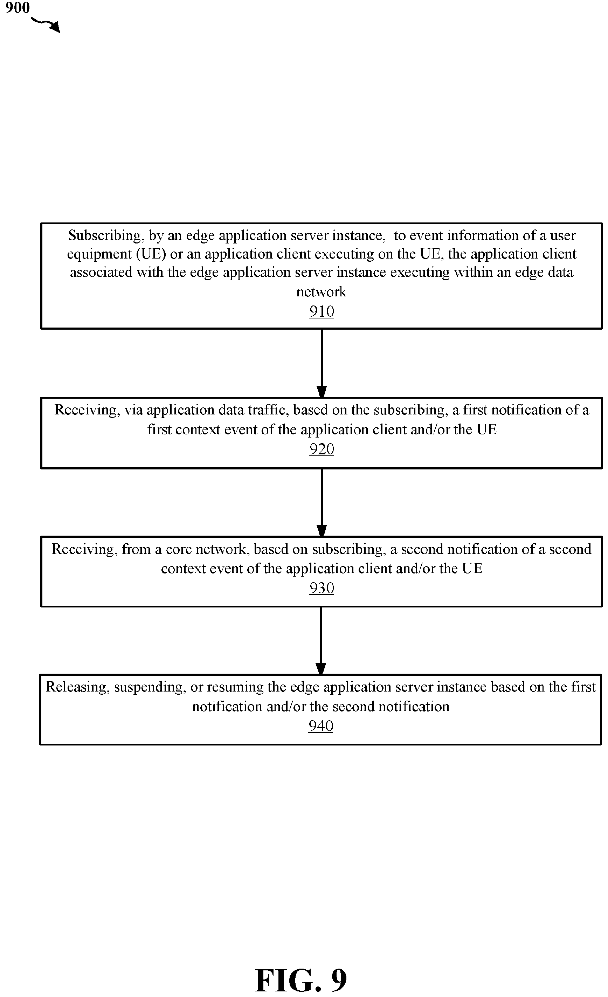

FIG. 9 is a flowchart of an example method of managing edge application servers based on application client state and/or UE state, in accordance with some aspects of the present disclosure. The method may be performed by a computing device (e.g., the EAS instance 518 of FIG. 5, the computing device 702 of FIG. 7 which may include the memory 706 and which may be the entire computing device 702 or a component of the computing device 702, such as the processor 704).

At block 910, the method 900 includes subscribing, by an edge application server instance, to event information of a user equipment (UE) or an application client executing on the UE, the application client associated with the edge application server instance executing within an edge data network. For example, the EAS instance 518 may subscribe to event information corresponding to the AC 512(1) and/or the UE 502(1) at the EEC 510, AC 512(1), and/or the core network 504. In some aspects, the EAS instance 518 may subscribe to the event information corresponding to the AC 512(1) and/or the UE 502(1) at the EEC 510, AC 512(1), and/or the core network 504 by transmitting a subscription request 524(1) to the EEC 510, AC 512(1), and/or the core network 504, and receive a subscription response 526(1) confirming that the subscription has been established.

Accordingly, the EAS instance 518, the computing device 702, and/or the processor 704 executing the context management component 522 may provide means for subscribing, by an edge application server instance, to event information of a user equipment (UE) or an application client executing on the UE, the application client associated with the edge application server instance executing within an edge data network.

At block 920, the method 900 may include receiving, based on the subscribing, a first notification of a first context event of the application client and/or the UE. For example, the EAS instance 518 may receive one or more notifications 528 from the AC 512(1) within the application data traffic 520 based on the previously-established subscription. Additionally, or alternatively, in some aspects, the EAS instance 518 may receive the one or more notifications 528 from the EEC 510 via the EES 514. Further, the one or more notifications 528 may indicate the status and/or application context of the AC 512(1). The first context event may indicate at least of one of the UE 502(1) being in a sleep mode or other inactive mode, the UE 502(1) waking up from a sleep mode or other inactive mode, a lock screen of the UE 502(1) being active, an application context focus of the AC 512(1), the network connectivity of the UE 502(1), the current throughput capabilities and performance of the UE 502(1), the battery power of the UE 502(1), or whether a user is currently focused on and/or holding the UE 502(1)

Accordingly, the EAS instance 518, the computing device 702, and/or the processor 704 executing the context management component 522 may provide means for receiving, via application data traffic, based on subscribing, a first notification of a first context event of the application client and/or the UE.

At block 930, the method 900 may include receiving, from a core network, based on the subscribing, a second notification of a second context event of the application client and/or the UE. For example, the EAS instance 518 may receive one or more notifications 528 from core network 504 identifying activity of the AC 512(1) and/or the UE 502(1) based on the previously-established subscription. The second context event may indicate at least one of the reachability of the UE 502(1), the PDU session state of the UE 502(1), or the connection state (e.g., RRC state) of the UE 502(1).

Accordingly, the EAS instance 518, the computing device 702, and/or the processor 704 executing the context management component 522 may provide means for receiving, from a core network, based on the subscribing, a second notification of a second context event of the application client and/or the UE.

At block 940, the method 900 may include releasing, suspending, or resuming the edge application server instance based on the first notification and/or the second notification. For example, the EES 514 may release itself, suspend itself, or resume based on the one or more notifications 528.

Accordingly, the EAS instance 518, the computing device 702, and/or the processor 704 executing the context management component 522 may provide means for releasing, suspending, or resuming the edge application server instance based on the first notification and/or the second notification.

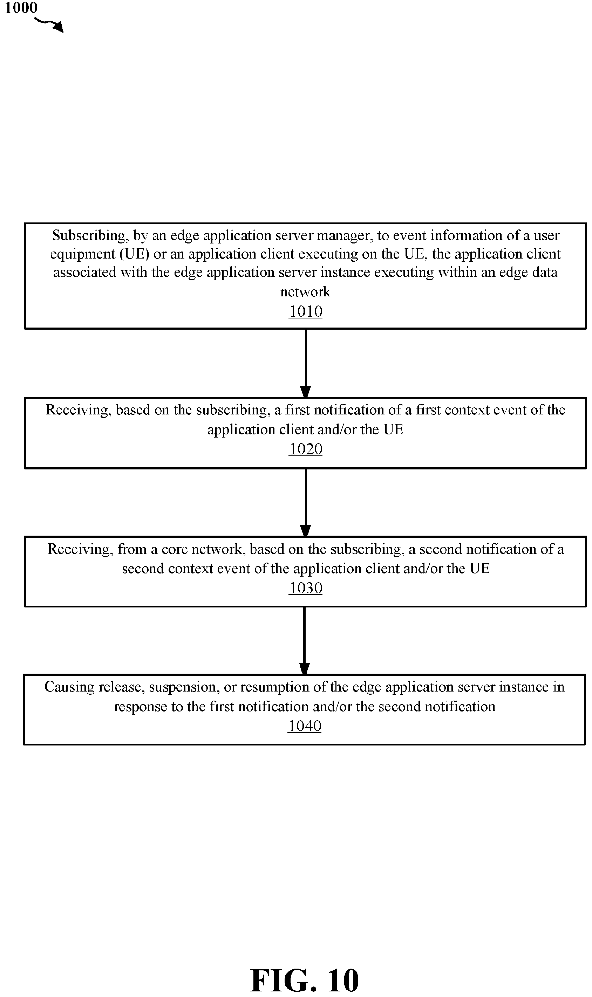

FIG. 10 is a flowchart of an example method of managing edge application servers based on application client state and/or UE state, in accordance with some aspects of the present disclosure. The method may be performed by a computing device (e.g., the EAS management component 516, the computing device 702 of FIG. 7 which may include the memory 706 and which may be the entire computing device 702 or a component of the computing device 702, such as the processor 704).

At block 1010, the method 1000 includes subscribing, by an edge application server manager, to event information of a user equipment (UE) or an application client executing on the UE, the application client associated with the edge application server instance executing within an edge data network. For example, the EAS management component 516 may subscribe to event information corresponding to the AC 512(1) and/or the UE 502(1) at the EEC 510, AC 512(1), and/or the core network 504. In some aspects, the EAS management component 516 may subscribe to the event information corresponding to the AC 512(1) and/or the UE 502(1) at the EEC 510, AC 512(1), and/or the core network 504 by transmitting a subscription request 524(1) to the EEC 510, AC 512(1), and/or the core network 504, and receive a subscription response 526(1) confirming that the subscription has been established.

Accordingly, the EAS management component 516, the computing device 702, and/or the processor 704 executing the context management component 522 may provide means for subscribing, by an edge application server manager, to event information of a user equipment (UE) or an application client executing on the UE, the application client associated with the edge application server instance executing within an edge data network.

At block 1020, the method 1000 may include receiving, based on the subscribing, a first notification of a first context event of the application client and/or the UE. For example, a subscriber the EAS management component 516 may receive one or more notifications 528 from the EEC 510 identifying activity of the AC 512(1) and/or the UE 502(1) based on the previously-established subscription. In some aspects, the EAS management component 516 may receive the one or more notifications 528 from the EEC 510 via the EES 514. Further, the one or more notifications 528 may indicate the status and/or application context of the AC 512(1). Some examples of a context event may include

Accordingly, the EAS management component 516, the computing device 702, and/or the processor 704 executing the context management component 522 may provide means for receiving, via application data traffic, based on subscribing, a first notification of a first context event of the application client and/or the UE.

At block 1030, the method 1000 may include receiving, from a core network, based on the subscribing, a second notification of a second context event of the application client and/or the UE. For example, the management component 516 may receive one or more notifications 528 from the core network 504 identifying activity of the AC 512(1) and/or the UE 502(1) based on the previously-established subscription.

Accordingly, the EAS management component 516, the computing device 702, and/or the processor 704 executing the context management component 522 may provide means for receiving, from a core network, based on subscribing, a second notification of a second context event of the application client and/or the UE.

At block 1040, the method 1000 may include causing release, suspension, or resumption of the edge application server instance in response to the first notification and/or the second notification. For example, the EAS management component 516 may transmit an instance instruction 530(1) based on the one or more notifications 528.

Accordingly, the EAS management component 516, the computing device 702, and/or the processor 704 executing the context management component 522 may provide means for causing release, suspension, or resumption of the edge application server instance in response to the first notification and/or the second notification.

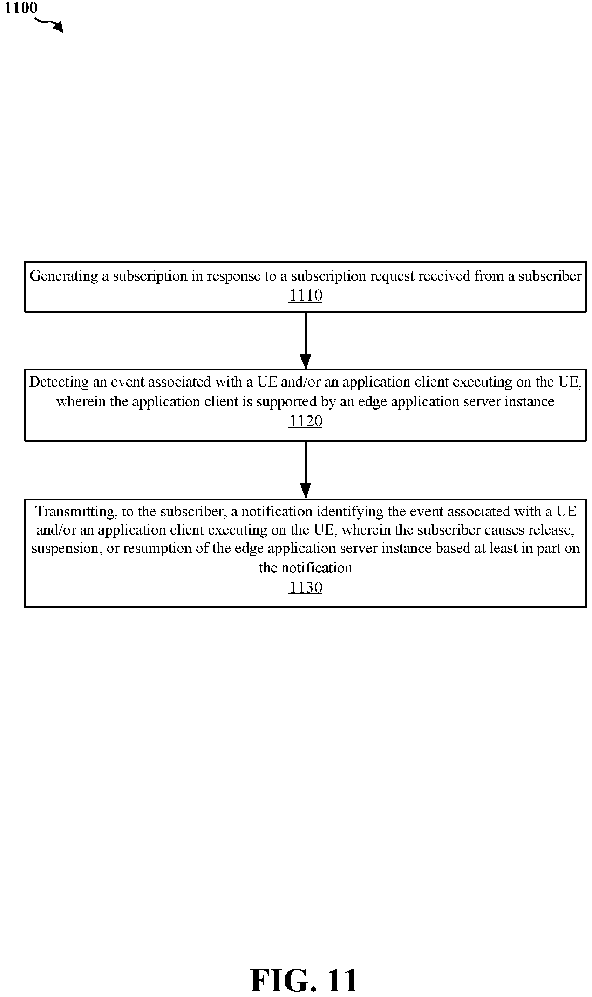

FIG. 11 is a flowchart of an example method of managing edge application servers based on application client state and/or UE state, in accordance with some aspects of the present disclosure.

The method may be performed by a UE (e.g., the UE 104 of FIGS. 1 and 3, which may include the memory 360 and which may be the entire UE 104 or a component of the UE 104, such as the EEC 140, the EEC 510, the monitoring component 532, the notification component 534, the TX processor 368, the RX processor 356, and/or the controller/processor 359; the UE 502 of FIG. 5; and/or the computing device 602 of FIG. 6).

At block 1110, the method 1100 may include generating a subscription in response to a subscription request received from a subscriber. For example, the EEC 510 may receive a subscription request 524(1) from a subscriber (e.g., the EES 514, the EAS management component 516, or the EAS instance 518) and transmit a subscription response 526(1) confirming that the subscription has been established.

Accordingly, the UE 104, the UE 502, the computing device 602, the TX processor 368, the RX processor 356, and/or the controller/processor 359, executing the EEC 510 may provide means for generating a subscription in response to a subscription request received from a subscriber.

At block 1120, the method 1100 may include detecting an event associated with a UE and/or an application client executing on the UE, wherein the application client is supported by an edge application server instance. For example, the EEC 510 may monitor activity of the AC 512(1) and the UE 502, and detect events related to state of the AC 512(1) and the UE 502.

Accordingly, the UE 104, the UE 502, the computing device 602, the TX processor 368, the RX processor 356, and/or the controller/processor 359 executing the EEC 510 may provide means for detecting an event associated with a UE and/or an application client executing on the UE, wherein the application client is supported by an edge application server instance.

At block 1130, the method 1100 may include transmitting, to the subscriber, a notification identifying the event associated with a UE and/or an application client executing on the UE, wherein the subscriber causes release, suspension, or resumption of the edge application server instance based at least in part on the notification. For example, the EEC 510 may generate one or more notifications 528 based on the detected event, and transmit the one or more notifications 528 to the EES 514, the EAS management component 516, or the EAS instance 518. Further, upon receipt of the one or more notifications, the EES 514, the EAS management component 516, the EAS instance 518 causes release, suspension, or resumption of the EAS instance 518(1).

Accordingly, the UE 104, the UE 502, the computing device 602, the TX processor 368, the RX processor 356, and/or the controller/processor 359 executing the EEC 510 executing on the UE, wherein the subscriber causes release, suspension, or resumption of the edge application server instance based at least in part on the notification.

The previous description is provided to enable any person having ordinary skill in the art to practice the various aspects described herein. Various modifications to these aspects will be readily apparent to a person having ordinary skill in the art, and the generic principles defined herein may be applied to other aspects. The claims are not intended to be limited to the aspects shown herein, but is to be accorded the full scope consistent with the language claims, where reference to an element in the singular is not intended to mean "one and only one" unless specifically so stated, but rather "one or more." Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to a person having ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. An edge computing device (702), comprising:
a memory (706) storing computer-executable instructions; and
at least one processor (704) coupled with the memory and configured to execute the computer-executable instructions to:
establish (810) a subscription to event information of a user equipment, UE (502), or an application client executing on the UE, the UE or the application client associated with an edge application server instance (518n) executing within an edge data network (506);
receive (820), based on the subscription, a notification (528) of a context event of the application client and/or the UE; and
cause (830) release, suspension, or resumption of the edge application server instance in response to the notification, wherein to cause release or suspension of the edge application server instance in response to the notification, the at least one processor is configured to execute the computer-executable instructions to:
determine that no other applications and/or UEs are currently associated with the edge application server instance; and
cause release, suspension or resumption of the edge application server instance based on no other applications and/or UEs being currently associated with the edge application server instance.

2. The edge computing device of claim 1, wherein to establish the subscription to the event information of the application client, the at least one processor is configured to execute the computer-executable instructions to request, from a wireless core network serving the UE, the subscription to the event information of the application client and/or the UE; and receive, from the wireless core network serving the UE, confirmation of the subscription, and
wherein to receive the notification of the context event, the at least one processor is configured to execute the computer-executable instructions to receive, from the wireless core network, the notification of the context event based on wireless activity between the UE and the wireless core network.

3. The edge computing device of claim 2, wherein the notification identifies at least one of protocol data unit, PDU, session status or UE reachability status.

4. The edge computing device of claim 1, wherein to establish the subscription to the event information of the application client, the at least one processor is configured to execute the computer-executable instructions to request, from an edge enabler client executing on the UE, the subscription to the event information of the application client and/or the UE; and receive, from the edge enabler client executing on the UE, confirmation of the subscription,
wherein to receive the notification of the context event, the at least one processor is configured to execute the computer-executable instructions to receive, from the UE, the notification of the context event based on device activity at the UE, the context event detected by the edge enabler client based on monitoring of the UE and/or application.

5. The edge computing device of claim 4, wherein the notification identifies at least one of an application context of the application client or a device context of the UE.

6. The edge computing device of claim 1, wherein to cause release, suspension, or resumption of the edge application server instance in response to the notification, the at least one processor is configured to execute the computer-executable instructions to transmit a release request, a suspension request, or a resumption request to the edge application server instance or an edge application server manager that manages the edge application server instance.

7. A method for wireless communication, comprising:
establishing (810) a subscription to event information of a user equipment, UE or an application client executing on the UE, the UE or the application client associated with an edge application server instance executing within an edge data network;
receiving (820), based on the subscription, a notification of a context event of the application client and/or the UE; and
causing (830) release, suspension, or resumption of the edge application server instance in response to the notification, wherein causing release or suspension of the edge application server instance in response to the notification, comprises:
determining that no other applications and/or UEs are currently associated with the edge application server instance; and
causing release or suspension, or resumption of the edge application server instance based on no other applications and/or UEs being currently associated with the edge application server instance.

8. The method of claim 7, wherein establishing the subscription to the event information of the application client comprises requesting, from a wireless core network serving the UE, the subscription to the event information of the application client and/or the UE; and receiving, from the wireless core network serving the UE, confirmation of the subscription; and
wherein receiving the notification of the context event comprises receiving, from the wireless core network, the notification of the context event based on wireless activity between the UE and the wireless core network.

9. The method of claim 8, wherein the notification identifies at least one of protocol data unit, PDU, session status or UE reachability status.

10. The method of claim 7, wherein establishing the subscription to the event information of the application client comprises requesting, from an edge enabler client executing on the UE, the subscription to the event information of the application client and/or the UE; and receiving, from the edge enabler client executing on the UE, confirmation of the subscription; and
wherein receiving the notification of the context event comprises receiving, from the UE, the notification of the context event based on device activity at the UE, the context event detected by the edge enabler client based on monitoring of the UE and/or application.

11. The method of claim 10, wherein the notification identifies at least one of an application context of the application client or a device context of the UE.

12. The method of claim 7, wherein causing release, suspension, or resumption of the edge application server instance in response to the notification comprises transmitting a release request, a suspension request, or a resumption request to the edge application server instance or an edge application server manager that manages the edge application server instance.

13. A non-transitory computer-readable medium having instructions thereon that, when executed by at least one computing device, causes the at least one computing device to perform operations comprising the steps of the method of any of claims 7 to 12.

## Patentansprüche

1. Ein Edge-Rechengerät (702), aufweisend:
einen Speicher (706), der computerausführbare Befehle speichert, und
wenigstens einen Prozessor (704), der mit dem Speicher gekoppelt ist und konfiguriert ist zum Ausführen der computerausführbaren Befehle zum:
Herstellen (810) eines Abonnements für Ereignisinformationen eines Benutzergeräts (User Equipment bzw. UE) (502) oder eines auf dem UE ausgeführten Anwendungsclients, wobei das UE oder der Anwendungsclient mit einer in einem Edge-Datennetz (506) ausgeführten Edge-Anwendungsserver-Instanz (518n) assoziiert ist,
Empfangen (820), basierend auf dem Abonnement, einer Benachrichtigung (528) eines Kontextereignisses des Anwendungsclients und/oder des UE, und
Veranlassen (830) einer Beendigung, Aussetzung oder Wiederaufnahme der Edge-Anwendungsserver-Instanz in Antwort auf die Benachrichtigung, wobei für das Veranlassen einer Beendigung oder Aussetzung der Edge-Anwendungsserver-Instanz in Antwort auf die Benachrichtigung der wenigstens eine Prozessor konfiguriert ist zum Ausführen der computerausführbaren Befehle zum:
Bestimmen, dass keine anderen Anwendungen und/oder UEs derzeit mit der Edge-Anwendungsserver-Instanz assoziiert sind, und
Veranlassen einer Beendigung, Aussetzung oder Wiederaufnahme der Edge-Anwendungsserver-Instanz basierend darauf, dass derzeit keine anderen Anwendungen und/oder UEs mit der Edge-Anwendungsserver-Instanz assoziiert sind.

2. Edge-Rechengerät nach Anspruch 1, wobei für das Herstellen des Abonnements für die Ereignisinformationen des Anwendungsclients der wenigstens eine Prozessor konfiguriert ist zum Ausführen der computerausführbaren Befehle für das Anfragen, von einem das UE bedienenden drahtlosen Kernnetz, des Abonnements für die Ereignisinformationen des Anwendungsclients und/oder des UE und für das Empfangen, von dem das UE bedienenden drahtlosen Kernnetz, einer Bestätigung des Abonnements, und
wobei für das Empfangen der Benachrichtigung des Kontextereignisses der wenigstens eine Prozessor konfiguriert ist zum Ausführen der computerausführbaren Befehle für das Empfangen, von dem drahtlosen Kernnetz, der Benachrichtigung des Kontextereignisses basierend auf einer drahtlosen Aktivität zwischen dem UE und dem drahtlosen Kernnetz.

3. Edge-Rechengerät nach Anspruch 2, wobei die Benachrichtigung wenigstens einen Protokolldateneinheit (Protocol Data Unit bzw. PDU)-Sitzungsstatus oder einen UE-Erreichbarkeitsstatus identifiziert.

4. Edge-Rechengerät nach Anspruch 1, wobei für das Herstellen des Abonnements für die Ereignisinformationen des Anwendungsclients der wenigstens eine Prozessor konfiguriert ist zum Ausführen der computerausführbaren Befehle für das Anfragen, von einem auf dem UE ausgeführten Edge-Enablerclient, des Abonnements für die Ereignisinformationen des Anwendungsclients und/oder des UE und für das Empfangen, von dem auf dem UE ausgeführten Edge-Enablerclient, einer Bestätigung des Abonnements,
wobei für das Empfangen der Benachrichtigung des Kontextereignisses der wenigstens eine Prozessor konfiguriert ist zum Ausführen der computerausführbaren Befehle für das Empfangen, von dem UE, der Benachrichtigung des Kontextereignisses basierend auf einer Geräteaktivität an dem UE, wobei das Kontextereignis durch den Edge-Enablerclient basierend auf dem Überwachen des UE und/oder der Anwendung erfasst wird.

5. Edge-Rechengerät nach Anspruch 4, wobei die Benachrichtigung einen Anwendungskontext des Anwendungsclients und/oder einen Gerätekontext des UE identifiziert.

6. Edge-Rechengerät nach Anspruch 1, wobei für das Veranlassen der Beendigung, Aussetzung oder Wiederaufnahme der Edge-Anwendungsserver-Instanz in Antwort auf die Benachrichtigung der wenigstens eine Prozessor konfiguriert ist zum Ausführen der computerausführbaren Befehle für das Senden einer Beendigungsanfrage, einer Aussetzungsanfrage oder einer Wiederaufnahmeanfrage an die Edge-Anwendungsserver-Instanz oder einen Edge-Anwendungsserver-Verwalter, der die Edge-Anwendungsserver-Instanz verwaltet.

7. Ein Verfahren für eine drahtlose Kommunikation, aufweisend:
Herstellen (810) eines Abonnements für Ereignisinformationen eines Benutzergeräts (User Equipment bzw. UE) oder eines auf dem UE ausgeführten Anwendungsclients, wobei das UE oder der Anwendungsclient mit einer in einem Edge-Datennetz ausgeführten Edge-Anwendungsserver-Instanz assoziiert ist,
Empfangen (820), basierend auf dem Abonnement, einer Benachrichtigung eines Kontextereignisses des Anwendungsclients und/oder des UE, und
Veranlassen (830) einer Beendigung, Aussetzung oder Wiederaufnahme der Edge-Anwendungssserver-Instanz in Antwort auf die Benachrichtigung, wobei das Veranlassen der Beendigung oder Aussetzung der Edge-Anwendungsserver-Instanz in Antwort auf die Benachrichtigung aufweist:
Bestimmen, dass keine anderen Anwendungen und/oder UEs derzeit mit der Edge-Anwendungsserver-Instanz assoziiert sind, und
Veranlassen einer Beendigung, Aussetzung oder Wiederaufnahme der Edge-Anwendungsserver-Instanz basierend darauf, dass derzeit keine anderen Anwendungen und/oder UEs mit der Edge-Anwendungsserver-Instanz assoziiert sind.

8. Verfahren nach Anspruch 7, wobei das Herstellen des Abonnements für die Ereignisinformationen des Anwendungsclients das Anfragen, von einem das UE bedienenden drahtlosen Kernnetz, des Abonnements für die Ereignisinformationen des Anwendungsclients und/oder des UE und das Empfangen, von dem das UE bedienenden drahtlosen Kernnetz, einer Bestätigung des Abonnements aufweist, und
wobei das Empfangen der Benachrichtigung des Kontextereignisses das Empfangen, von dem drahtlosen Kernnetz, der Benachrichtigung des Kontextereignisses basierend auf einer drahtlosen Aktivität zwischen dem UE und dem drahtlosen Kernnetz aufweist.

9. Verfahren nach Anspruch 8, wobei die Benachrichtigung wenigstens einen Protokolldateneinheit (Protocol Data Unit bzw. PDU)-Sitzungsstatus oder einen UE-Erreichbarkeitsstatus identifiziert.

10. Verfahren nach Anspruch 7, wobei das Herstellen des Abonnements für die Ereignisinformationen des Anwendungsclients das Anfragen, von einem auf dem UE ausgeführten Edge-Enablerclient, des Abonnements für die Ereignisinformationen des Anwendungsclients und/oder des UE und das Empfangen, von dem auf dem UE ausgeführten Edge-Enablerclient, einer Bestätigung des Abonnements aufweist, und
wobei das Empfangen der Benachrichtigung des Kontextereignisses das Empfangen, von dem UE, der Benachrichtigung des Kontextereignisses basierend auf einer Geräteaktivität an dem UE aufweist, wobei das Kontextereignis durch den Edge-Enablerclient basierend auf dem Überwachen des UE und/oder der Anwendung erfasst wird.

11. Verfahren nach Anspruch 10, wobei die Benachrichtigung einen Anwendungskontext des Anwendungsclients oder einen Gerätekontext des UE identifiziert.

12. Verfahren nach Anspruch 7, wobei das Veranlassen der Beendigung, Aussetzung oder Wiederaufnahme der Edge-Anwendungsserver-Instanz in Antwort auf die Benachrichtigung das Senden einer Beendigungsanfrage, einer Aussetzungsanfrage oder einer Wiederaufnahmeanfrage an die Edge-Anwendungsserver-Instanz oder einen Edge-Anwendungsserver-Verwalter, der die Edge-Anwendungsserver-Instanz verwaltet, aufweist.

13. Ein nicht-transitorisches, computerlesbares Medium, das Befehle aufweist, die bei einer Ausführung durch wenigstens ein Rechengerät das wenigstens eine Rechengerät veranlassen zum Durchführen von Operationen, die die Schritte des Verfahrens gemäß einem der Ansprüche 7 bis 12 aufweisen.

## Revendications

1. Dispositif d'informatique en périphérie (702), comprenant :
une mémoire (706) stockant des instructions exécutables par ordinateur ; et
au moins un processeur (704) couplé à la mémoire et configuré pour exécuter les instructions exécutables par ordinateur pour :
établir (810) un abonnement à des informations d'événement d'un équipement utilisateur, UE (502), ou d'un client d'application s'exécutant sur l'UE, l'UE ou le client d'application étant associé à une instance de serveur d'application en périphérie (518n) s'exécutant au sein d'un réseau de données en périphérie (506) ;
recevoir (820), sur la base de l'abonnement, une notification (528) d'un événement de contexte du client d'application et/ou de l'UE ; et
provoquer (830) une libération, une suspension, ou une reprise de l'instance de serveur d'application en périphérie en réponse à la notification, dans lequel, pour provoquer la libération ou la suspension de l'instance de serveur d'application en périphérie en réponse à la notification, l'au moins un processeur est configuré pour exécuter les instructions exécutables par ordinateur pour :
déterminer qu'aucune autre application et/ou aucun autre UE ne sont actuellement associés à l'instance de serveur d'application en périphérie ; et
provoquer la libération, la suspension ou la reprise de l'instance de serveur d'application en périphérie sur la base du fait qu'aucune autre application et/ou aucun autre UE ne sont actuellement associés à l'instance de serveur d'application en périphérie.

2. Dispositif d'informatique en périphérie selon la revendication 1, dans lequel, pour établir l'abonnement aux informations d'événement du client d'application, l'au moins un processeur est configuré pour exécuter les instructions exécutables par ordinateur pour demander, à partir d'un réseau central sans fil desservant l'UE, l'abonnement aux informations d'événement du client d'application et/ou de l'UE ; et recevoir, à partir du réseau central sans fil desservant l'UE, une confirmation de l'abonnement, et
dans lequel, pour recevoir la notification de l'événement de contexte, l'au moins un processeur est configuré pour exécuter les instructions exécutables par ordinateur pour recevoir, à partir du réseau central sans fil, la notification de l'événement de contexte sur la base d'une activité sans fil entre l'UE et le réseau central sans fil.

3. Dispositif d'informatique en périphérie selon la revendication 2, dans lequel la notification identifie au moins un élément parmi un état de session d'unité de données de protocole, PDU, ou un état d'accessibilité de l'UE.

4. Dispositif d'informatique en périphérie selon la revendication 1, dans lequel, pour établir l'abonnement aux informations d'événement du client d'application, l'au moins un processeur est configuré pour exécuter les instructions exécutables par ordinateur pour demander, à partir d'un client activateur de périphérie s'exécutant sur l'UE, l'abonnement aux informations d'événement du client d'application et/ou de l'UE ; et recevoir, à partir du client activateur de périphérie s'exécutant sur l'UE, une confirmation de l'abonnement,
dans lequel, pour recevoir la notification de l'événement de contexte, l'au moins un processeur est configuré pour exécuter les instructions exécutables par ordinateur pour recevoir, à partir de l'UE, la notification de l'événement de contexte sur la base d'une activité de dispositif au niveau de l'UE, l'événement de contexte étant détecté par le client activateur de périphérie sur la base d'une surveillance de l'UE et/ou de l'application.

5. Dispositif d'informatique en périphérie selon la revendication 4, dans lequel la notification identifie au moins l'un parmi un contexte d'application du client d'application ou un contexte de dispositif de l'UE.

6. Dispositif d'informatique en périphérie selon la revendication 1, dans lequel, pour provoquer la libération, la suspension, ou la reprise de l'instance de serveur d'application en périphérie en réponse à la notification, l'au moins un processeur est configuré pour exécuter les instructions exécutables par ordinateur pour transmettre une requête de libération, une requête de suspension, ou une requête de reprise à l'instance de serveur d'application en périphérie ou à un gestionnaire de serveur d'application en périphérie qui gère l'instance de serveur d'application en périphérie.

7. Procédé de communication sans fil, comprenant :
un établissement (810) d'un abonnement à des informations d'événement d'un équipement utilisateur, UE, ou d'un client d'application s'exécutant sur l'UE, l'UE ou le client d'application étant associé à une instance de serveur d'application en périphérie s'exécutant au sein d'un réseau de données en périphérie ;
une réception (820), sur la base de l'abonnement, d'une notification d'un événement de contexte du client d'application et/ou de l'UE ; et
une provocation (830) d'une libération, d'une suspension, ou d'une reprise de l'instance de serveur d'application en périphérie en réponse à la notification, dans lequel la provocation de la libération ou de la suspension de l'instance de serveur d'application en périphérie en réponse à la notification, comprend :
une détermination du fait qu'aucune autre application et/ou aucun autre UE n'est actuellement associé à l'instance de serveur d'application en périphérie ; et
une provocation de la libération ou de la suspension, ou de la reprise de l'instance de serveur d'application en périphérie sur la base du fait qu'aucune autre application et/ou aucun autre UE ne sont actuellement associés à l'instance de serveur d'application en périphérie.

8. Procédé selon la revendication 7, dans lequel l'établissement de l'abonnement aux informations d'événement du client d'application comprend une demande, à partir d'un réseau central sans fil desservant l'UE, de l'abonnement aux informations d'événement du client d'application et/ou de l'UE ; et une réception, à partir du réseau central sans fil desservant l'UE, d'une confirmation de l'abonnement ; et
dans lequel la réception de la notification de l'événement de contexte comprend une réception, à partir du réseau central sans fil, de la notification de l'événement de contexte sur la base d'une activité sans fil entre l'UE et le réseau central sans fil.

9. Procédé selon la revendication 8, dans lequel la notification identifie au moins un élément parmi un état de session d'unité de données de protocole, PDU, ou un état d'accessibilité de l'UE.

10. Procédé selon la revendication 7, dans lequel l'établissement de l'abonnement aux informations d'événement du client d'application comprend une demande, à partir d'un client activateur de périphérie s'exécutant sur l'UE, de l'abonnement aux informations d'événement du client d'application et/ou de l'UE ; et une réception, à partir du client activateur de périphérie s'exécutant sur l'UE, d'une confirmation de l'abonnement ; et
dans lequel la réception de la notification de l'événement de contexte comprend une réception, à partir de l'UE, de la notification de l'événement de contexte sur la base d'une activité de dispositif au niveau de l'UE, l'événement de contexte étant détecté par le client activateur de périphérie sur la base d'une surveillance de l'UE et/ou de l'application.

11. Procédé selon la revendication 10, dans lequel la notification identifie au moins un parmi un contexte d'application du client d'application ou un contexte de dispositif de l'UE.

12. Procédé selon la revendication 7, dans lequel la provocation de la libération, de la suspension, ou de la reprise de l'instance de serveur d'application en périphérie en réponse à la notification comprend une transmission d'une requête de libération, d'une requête de suspension, ou d'une requête de reprise à l'instance de serveur d'application en périphérie ou à un gestionnaire de serveur d'application en périphérie qui gère l'instance de serveur d'application en périphérie.

13. Support lisible par ordinateur non transitoire comportant des instructions sur celui-ci qui, lorsqu'elles sont exécutées par au moins un dispositif informatique, amènent l'au moins un dispositif informatique à effectuer des opérations comprenant les étapes du procédé selon l'une quelconque des revendications 7 à 12.
